# EUROPÄISCHE PATENTSCHRIFT

(11) **EP 1 807 649 B1**
(45) Veröffentlichungstag und Bekanntmachung des Hinweises auf die Patenterteilung: **26.08.2009**
(21) Anmeldenummer: 05782005.2
(22) Anmeldetag: 08.09.2005
(51) Int. Cl.: F16L 37/098

(54) **KUPPLUNGSVORRICHTUNG ZUM VERBINDEN VON LEITUNGEN UND KRAFTFAHRZEUG MIT EINER DERARTIGEN KUPPLUNGSVORRICHTUNG**
COUPLING DEVICE FOR THE CONNECTION OF LINES AND MOTOR VEHICLE WITH SUCH A COUPLING DEVICE
DISPOSITIF D'ACCOUPLEMENT SERVANT A ASSEMBLER DES CONDUITES ET VEHICULE AUTOMOBILE EQUIPE D'UN DISPOSITIF D'ACCOUPLEMENT DE CE TYPE

(30) Priorität: 05.11.2004 DE 102004053539
(43) Veröffentlichungstag der Anmeldung: 18.07.2007
(73) Patentinhaber: VERITAS AG, 63571 Gelnhausen (DE)
(72) Erfinder: RÖSCH, Thomas, 63589 Linsengericht (DE); HEMPEL, Werner, 61130 Nidderau (DE); EICH, Stefan, 63637 Jossgrund (DE); GÜNTHER, Wolfgang, 63688 Gedern (DE)
(74) Vertreter: Grünecker, Kinkeldey, Stockmair & Schwanhäusser Anwaltssozietät
(86) Internationale Anmeldenummer: PCT/EP2005/009672
(87) Internationale Veröffentlichungsnummer: WO 2006/048070

(56) Entgegenhaltungen:
- EP-A- 0 537 906
- DE-C1- 19 704 096
- DE-U1- 20 213 806
- FR-A- 2 780 765
- US-A- 5 924 746

## Beschreibung

Die Erfindung bezieht sich auf eine Kupplungsvorrichtung zum Verbinden von Leitungen mit einem Gehäuse, in dem eine Öffnung vorgesehen ist, einer Halteeinrichtung, die im Gehäuse angeordnet ist, und einem Leitungsende oder einem Stutzen, der in das Gehäuse durch die Öffnung einführbar und mit der Halteeinrichtung arretierbar ist, wobei das Leitungsende bzw. der Stutzen wenigstens einen Bund aufweist und das Gehäuse im Bereich der Halteeinrichtung zylindrisch ausgebildet und zur Bildung der Öffnung an dessen Ende radial nach innen gebogen ist.

Eine derartige Kupplungsvorrichtung ist bereits aus der EP 0 537 906 A bekannt.

Eine Kupplungsvorrichtung ist beispielsweise auch aus der DE 202 13 806 U1 bekannt.

Die in dem vorstehend bezeichneten Gebrauchsmuster offenbarte Kupplung umfasst ein Gehäuse, einen Adapter und ein Halteelement. Der Adapter ist in das Gehäuse eingesetzt und in diesem fixiert. Das Halteelement wird in den Adapter eingeschoben und wird von diesem im eingeschobenen Zustand axial und drehfest gehalten. Dazu sind am Halteelement mehrere elastische Zungen vorgesehen, die beim Einschieben des Halteelements in den Adapter zusammengedrückt werden. Im montierten Zustand sind die Zungen aufgespreizt und hintergreifen im Adapter ausgebildete Ausnehmungen, so dass der Adapter und das Halteelement formschlüssig verbunden sind.

Auf der Innenseite der Zungen des Halteelements sind klauenartige, elastische Vorsprünge vorgesehen, die im montierten Zustand den Bund einer in die Kupplung eingesteckten Leitung bzw. Stutzens hintergreifen, so dass die Leitung bzw. der Stutzen axial in der Kupplung fixiert sind.

Die bekannte Kupplung hat den Nachteil, dass bei einer Verformung des Gehäuses, beispielsweise durch einen Unfall, die Fixierung der Leitung bzw. des Stutzens in der Kupplung gelöst oder zumindest so geschwächt wird, dass die Leitung bzw. der Stutzen und die Kupplung leicht getrennt werden können.

Der Erfindung liegt die Aufgabe zugrunde, eine Kupplungsvorrichtung zum Verbinden von Leitungen anzugeben, die eine sichere Verbindung der Leitungen gewährleistet, selbst wenn das Gehäuse der Kupplungsvorrichtung verformt wird.

Erfindungsgemäß wird die vorstehend bezeichnete Aufgabe durch eine Kupplungsvorrichtung zum Verbinden von Leitungen gelöst, die ein Gehäuse, in dem eine Öffnung vorgesehen ist, eine Halteeinrichtung, die im Gehäuse angeordnet ist, und ein Leitungsende oder einen Stutzen umfasst, der in das Gehäuse durch die Öffnung einführbar und mit der Halteeinrichtung arretierbar ist, wobei das Leitungsende bzw. der Stutzen wenigstens einen Bund aufweist, das Gehäuse im Bereich der Halteeinrichtung zylindrisch ausgebildet und zur Bildung der Öffnung an dessen Ende radial nach innen gebogen ist und der Durchmesser der Öffnung derart an den Durchmesser des Bundes angepasst ist, dass der Bund bei einer Verformung des Gehäuses, die die konzentrische Anordnung des Bundes (14a) und der Öffnung (4a) verändert, eine Kante der Öffnung hintergreift.

Im Hinblick auf das Kraftfahrzeug wird die vorstehend bezeichnete Aufgabe durch den Gegenstand des Anspruchs 20 gelöst.

Die Erfindung hat den Vorteil, dass auf sehr einfache Weise eine zusätzliche Sicherung gegen Herausziehen der Leitung aus der Kupplungsvorrichtung geschaffen wird. Bei einer Verformung des Gehäuses, beispielsweise durch einen Unfall, wird die Lage des Bundes des Stutzens und der Kante der Öffnung verschoben, so dass die Öffnung und der Bund exzentrisch zueinander angeordnet sind. Durch die Anpassung des Durchmessers der Öffnung an den Durchmesser des Bundes, wird erreicht, dass der Bund die Kante hintergreift, so dass die Leitung bzw. der Stutzen in der Kupplung arretiert ist. Dieselbe Wirkung wird durch eine Verformung der Öffnung erzielt, wobei ebenfalls der Durchmesser der Bund die Kante aufgrund der Durchmesseranpassung hintergreift.

Die Durchmesseranpassung bedeutet, dass der Durchmesser der Öffnung in etwa dem Durchmesser des Bundes entspricht, bzw. geringfügig größer als der Durchmesser des Bundes ist.

Dadurch, dass das Gehäuse im Bereich der Halteeinrichtung zylindrisch ausgebildet und zur Bildung der Öffnung an dessen Ende radial nach innen gebogen ist, kann der Durchmesser der Öffnung, bezogen auf den Durchmesser des Bundes, einfach eingestellt werden.

Es hat sich als zweckmäßig erwiesen, wenn der Durchmesser der Öffnung um einen Betrag von 0,1 bis 1 mm, insbesondere von 0,4 bis 0,8 mm größer als der Durchmesser des Bundes ist.

Gemäß einer bevorzugten Ausführungsform ist ein Innenteil zwischen einer Arretierstellung und einer Lösestellung in Längsrichtung der Halteeinrichtung bewegbar. Dies hat den Vorteil, dass eine, beispielsweise beschädigte Leitung aus der Kupplung einfach gelöst werden kann, wobei die sichere Fixierung der Leitung in der Kupplung im Betrieb gewährleistet ist. Insbesondere ist es möglich, dass die Halteeinrichtung durch die längsverschiebliche Anordnung des Innenteils im Außenteil in eine Arretierstellung bzw. eine Lösestellung gebracht werden kann, in der die Leitung gehalten wird (Arretierstellung) oder aus der Kupplungsvorrichtung abgezogen werden kann (Lösestellung). Die erfindungsgemäße Kupplungsvorrichtung gestattet somit den einfachen Austausch schadhafter Leitungen.

In einer weitern bevorzugten Ausführungsform weist ein Außenteil wenigstens ein Betätigungsmittel zum Fixieren des Innenteils auf. Dies bringt den Vorteil, dass das Entkoppeln der Leitung und der Kupplungsvorrichtung dadurch erleichtert werden kann, dass das Innenteil durch das Betätigungsmittel in einer gewünschten Position, insbesondere in der Lösestellung fixiert werden kann, wodurch vermieden wird, dass das Innenteil durch das Abziehen der Leitung in die Arretierstellung überführt wird.

Außerdem wird dadurch die Sicherheit gegen unbeabsichtigtes Lösen der Kupplungsvorrichtung dadurch erhöht, dass zum Entkuppeln zwei getrennte Funktionen der Kupplungsvorrichtung erfüllt werden, nämlich zum einen das Überführen der Kupplungsvorrichtung in die Lösestellung und zum anderen das Aktivieren des Betätigungsmittels. Das bedeutet, dass die Kupplungsvorrichtung die darin gehaltene Leitung nur dann freigibt, wenn das Innenteil in die Lösestellung bewegt ist, beispielsweise durch axiales Zusammendrücken der Kupplungsvorrichtung und der Leitung, und das Betätigungsmittel aktiviert ist, so dass das Innenteil fixiert wird. Die Kupplungsvorrichtung kann somit so ausgestaltet werden, dass ein Entriegeln der in der Kupplungsvorrichtung gehaltenen Leitung nur dann möglich ist, wenn beide Funktionen (Lösestellung, Aktivierung des Betätigungsmittels) erfüllt sind.

Vorzugsweise ist das Betätigungsmittel im Bereich einer im Gehäuse vorgesehenen Öffnung angeordnet. Durch die Ausbildung der im Gehäuse vorgesehenen Öffnung, durch die das Betätigungsmittel zugänglich ist, wird die konstruktive Gestaltungsfreiheit erhöht und eine kompakte sowie robuste Kupplungsvorrichtung geschaffen.

In bevorzugter Weise ist vorgesehen, dass ein Gehäuseabschnitt zumindest im Bereich der Halteeinrichtung zylindrisch ausgebildet ist, wobei die Öffnung in der Mantelfläche des zylindrischen Gehäuseabschnitts angeordnet ist. Auf diese Weise kann die Betätigungseinrichtung einfach mit einem radialen Druck manuell beaufschlagt werden.

Das Betätigungsmittel kann wenigstens eine radial bewegbare Taste aufweisen, die mit dem Innenteil, insbesondere in der Lösestellung, formschlüssig oder reibschlüssig in Eingriff bringbar ist. Die Taste kann auf einfache Weise mit dem Innenteil in Verbindung gebracht werden, so dass dieses in der gewünschten Position gehalten wird.

Dabei kann die Taste ein Profil, insbesondere einen Vorsprung oder eine Ausnehmung, und das Innenteil ein passendes Gegenprofil, insbesondere eine Aufnehmung oder einen Vorsprung, aufweisen, die in Lösestellung gegenüber angeordnet und durch Betätigen der Taste in Eingriff bringbar sind. Die Ausbildung des Profils an der Taste sowie des Gegenprofils am Innenteil gestattet eine wirkungsvolle und feste Fixierung des Innenteils durch Formschluss.

In einer weiteren bevorzugten Ausführungsform umfasst das Innenteil ein Halteelement mit zwei konzentrisch angeordneten und beabstandeten Ringabschnitten, die durch in Längserstreckung der Halteeinrichtung angeordnete Stege verbunden sind, wobei das Gegenprofil in wenigstens einem der Stege ausgebildet ist. Die in Längserstreckung der Halteeinrichtung angeordneten Stege verbessern die axiale Stabilität des Innenteils, das durch die Ausbildung des Gegenprofils in wenigstens einem der Stege kompakt aufgebaut ist.

Ferner kann eine Oberfläche des Steges, in dem das Gegenprofil ausgebildet ist, im Bereich des Gegenprofils radial nach innen abgesenkt sein, so dass oberhalb der Stegoberfläche ein Freiraum zwischen dem Innenteil und dem Außenteil gebildet wird. Dadurch wird vermieden, dass das an der Taste vorgesehene Profil des Außenteils mit dem Innenteil kollidiert, wenn das Innenteil axial verschoben wird.

Gemäß einer bevorzugten Ausführungsform ist wenigstens eine, bezogen auf die Längsachse der Halteeinrichtung, geneigt angeordnete Keilfläche am Außenteil vorgesehen ist, die mit wenigstens einer komplementär ausgebildeten Keilfläche zusammenwirkt, die am Innenteil vorgesehen ist.

Diese Ausführungsform hat den Vorteil, dass die Halteeinrichtung automatisch zwangsverriegelt wird, wenn die Kupplungsvorrichtung durch einen Unfall verformt wird. Durch eine im wesentlichen quer zur Längsachse der Halteeinrichtung erfolgende Verformung der Kupplungsvorrichtung werden das Außenteil und das Innenteil durch eine im wesentlichen radial wirkende Kraft beaufschlagt. Die radial wirkende Kraft bewirkt, dass die beiden komplementär ausgebildeten Keilflächen des Außenteils und des Innenteils aufeinander gleiten, wodurch eine aufgrund der Neigung in Längsrichtung der Halteeinrichtung erfolgende Relativbewegung zwischen dem Außenteil und dem Innenteil auftritt. Diese durch die Verformung der Kupplungsvorrichtung erzwungene Längsbewegung des Innenteils bietet die Vorraussetzung dafür, dass die Halteeinrichtung in die Arretierstellung gebracht werden kann, so dass eine in der Kupplungsvorrichtung gehaltene Leitung zwangsverriegelt wird.

Dabei kommt es nicht darauf an, dass die durch die Verformung hervorgerufene Kraft exakt in radialer Richtung wirkt. Es ist ausreichend, wenn durch die Verformung eine Kraft erzeugt wird, die zu einer Verschiebung der Keilflächen führt, um die angestrebte Zwangsverriegelung zu bewirken.

Gemäß einer bevorzugten Ausführungsform der Erfindung ist das Außenteil im Gehäuse fixiert und das Innenteil in die Arretierstellung und Lösestellung bewegbar, wobei der Neigungswinkel der Keilflächen in der Arretierbewegungsrichtung des Innenteils geöffnet ist. Das bedeutet, dass die Relativbewegung zwischen dem Außenteil und dem Innenteil dadurch erfolgt, dass das Außenteil im Gehäuse ortsfest gehalten ist, und das Innenteil die Bewegung bezüglich des Außenteils durchführt. Die feste Lagerung des Außenteils im Gehäuse kann auf einfache Weise, beispielsweise durch eine formschlüssige Verbindung, hergestellt werden. Die Anordnung der Keilflächen derart, dass der Neigungswinkel in der Arretierbewegungsrichtung des Innenteils geöffnet ist, resultiert darin, dass das Innenteil in die Arretierstellung bewegt wird, wenn das Außenteil ortsfest ist, und die Kupplungsvorrichtung verformt wird.

Die am Innenteil vorgesehene, wenigstens eine Keilfläche kann an einem in Arretierbewegungsrichtung des Innenteils hinteren Ende wenigstens einer am Innenteil angeformten Längsrippe ausgebildet sein. Die Ausbildung von Längsrippen mit endseitig vorgesehenen Keilflächen führt zu einer robusten und stabilen Gestaltung des Innenteils, so dass das Innenteil auch bei größeren Verformungskräften seine ursprüngliche Form weitgehend behält. Außerdem kann durch Verwendung der Längsrippen eine kompakte Bauweise mit vergleichsweise wenig Material verwirklicht werden.

Das Innenteil kann zwei, drei oder vier Längsrippen aufweisen, die jeweils an einer Keilfläche ausgebildet sind. Dadurch wird eine gleichmäßige Kraftbeaufschlagung des Innenteils in Längsrichtung erreicht.

In einer weiteren bevorzugten Ausführungsform der Erfindung ist die am Außenteil vorgesehene, wenigstens eine Keilfläche an einem in Arretierbewegungsrichtung des Innenteils hinteren Ende wenigstens einer Längsnut ausgebildet, in der die wenigstens eine Längsrippe gleitverschieblich bewegbar ist. Diese Ausführungsform hat den Vorteil, dass die Längsrippe und die Nut eine Doppelfunktion erfüllen. Zum einen bewirken die miteinander in Eingriff befindliche Längsrippe und Nut eine Führung des Innenteils in Längsrichtung der Halteeinrichtung. Außerdem ermöglichen die Längsrippe und die Nut die Zwangsverriegelung der Kupplungsvorrichtung aufgrund der jeweils am hinteren Ende der Längsrippe bzw. der Nut ausgebildeten Keilfläche.

Vorzugsweise ist eine der Anzahl der Längsrippen entsprechende Anzahl an Längsnuten vorgesehen.

Das Innenteil kann wenigstens eine Raste mit einem radial außen angeordneten Arretierelement und das Außenteil wenigstens einen Anschlag aufweisen, wobei das Arretierelement und der Anschlag in der Arretierstellung zusammenwirken und in der Lösestellung getrennt sind. Die Trennung des Arretierelementes und des Anschlags erfolgt durch eine Längsverschiebung des Innenteils bezüglich des Außenteils in der Lösebewegungsrichtung.

Vorteilhafterweise wird durch das Zusammenwirken des radial außen angeordneten Arretierelementes mit dem Anschlag bewirkt, dass die Raste in radialer Richtung festgestellt ist, wodurch die Arretierfunktion der Kupplungsvorrichtung erfüllt wird.

Die wenigstens eine Raste kann einen Mitnehmer mit einem radial innen angeordneten Anschlag aufweisen, der entgegen der Arretierbewegungsrichtung des Innenteils angeordnet ist. Dabei erfüllt der Mitnehmer eine Doppelfunktion, da einmal der am Stutzen bzw. an der Leitung vorgesehene Bund, beispielsweise durch eine Herausziehbewegung, gegen den radial innen angeordneten Anschlag drängt, wodurch das Innenteil bezüglich des ortsfesten Außenteils in Längsrichtung und zwar in die Arretierstellung des Innenteils bewegt wird. Zum anderen fixiert der radial innen angeordnete Anschlag des Mitnehmers in der Arretierstellung des Innenteils den Bund des Stutzens, so dass eine weitere axiale Bewegung, insbesondere eine Herausziehbewegung des Stutzens, verhindert wird.

Es hat sich als vorteilhaft erwiesen, wenn die Raste radial federnd ausgebildet ist, wodurch das Einstecken bzw. das Lösen des Stutzens bzw. der Leitung erleichtert wird.

Die Erfindung wird im Folgenden mit weiteren Einzelheiten unter Bezug auf die beigefügten schematischen Zeichnungen beispielsweise näher erläutert.

### Dabei zeigen:

- Fig. 1: einen Querschnitt eines Ausführungsbeispiels einer Kupplungsvorrichtung nach der Erfindung, in die ein Stutzen eingesetzt ist;
- Fig. 2: einen Schnitt des Ausführungsbeispiels nach Fig. 1 entlang der Linie II-II;
- Fig. 3: einen Schnitt des Ausführungsbeispiels nach Fig. 1 entlang der Linie III-III;
- Fig. 4: einen Schnitt des Ausführungsbeispiels nach Fig. 1 entlang der Linie IV-IV;

- Fig. 5: einen Schnitt ähnlich wie nach Fig. 3 ohne den Stutzen zur Verdeutlichung des Betätigungsmittels;
- Fig. 6: eine Seitenansicht des montierten Außen- und Innenteils des Ausführungsbeispiels nach Fig. 1;
- Fig. 7: eine perspektivische Ansicht des Innenteils;
- Fig. 8: eine perspektivische Ansicht des Außenteils;
- Fig. 9: eine perspektivische Ansicht des längsgeschnittenen Ausführungsbeispiels nach Fig. 1 im unverformten Zustand;
- Fig. 10: die Ansicht des Ausführungsbeispiels nach Fig. 9 im verformten Zustand;
- Fig. 11: eine perspektivische Ansicht des Außenteils mit Sicherungshaken und
- Fig. 12: eine Explosivdarstellung des Außenteils und des Innenteils ohne Keilflächen zur Verdeutlichung des Betätigungsmittels und des zugehörigen Gegenprofils.

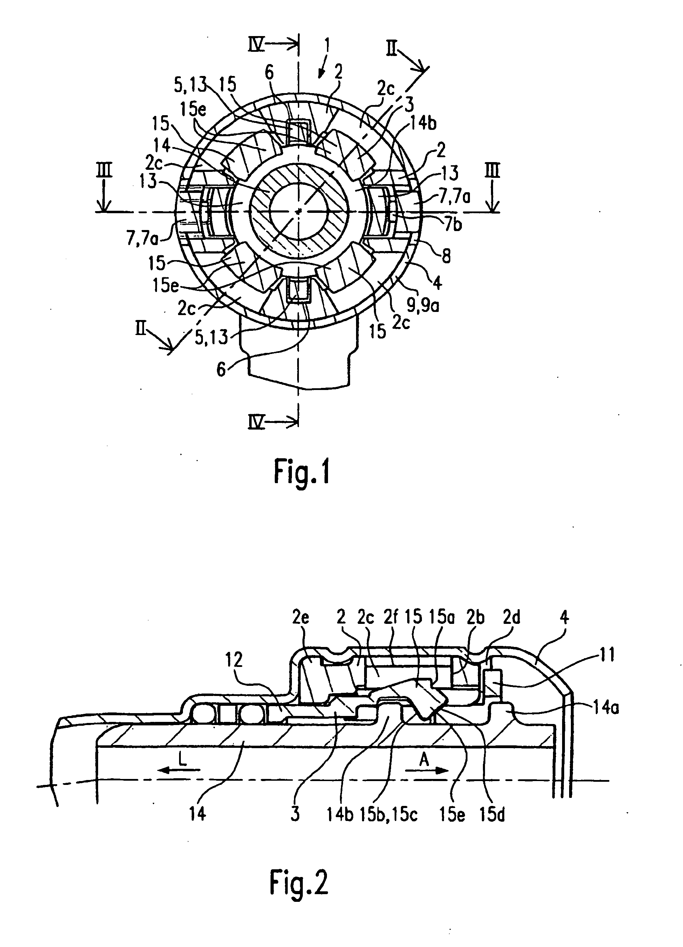

Fig. 1 stellt ein Ausführungsbeispiel der erfindungsgemäßen Kupplungsvorrichtung mit den wichtigsten Bauteilen dar, die insbesondere im Bereich der Automobilindustrie zum Verbinden von Fluidleitungen verwendet werden kann. Diese Kupplungsvorrichtung wird auch als Steckkupplung oder Schnellkupplung (Quick Connector) bezeichnet.

Wie in Fig. 1 dargestellt, weist die Kupplungsvorrichtung eine Halteeinrichtung 1 auf, die ein Außenteil 2 und ein Innenteil 3 umfasst, das im Außenteil 2 angeordnet ist. Das Außenteil 2 dient als Adapter, der im Gehäuse 4 fixiert ist. Das Innenteil 2 ist in Längsrichtung der Kupplungsvorrichtung verschieblich und kann in eine Lösestellung und eine Arretierstellung bewegt werden. Das Innenteil 3 fungiert als Halteelement 10 für einen Stutzen 14 oder ein entsprechend profiliertes Leitungsende, das in das Innenteil 3 eingesteckt wird. Zum Verriegeln des Stutzens 14 wird das Innenteil 3 in die mit A bezeichnete Arretierbewegungsrichtung verschoben. Zum Lösen wird das Innenteil 3 in die mit L bezeichnete Lösebewegungsrichtung verschoben.

### Das Innenteil 3 ist wie folgt aufgebaut:

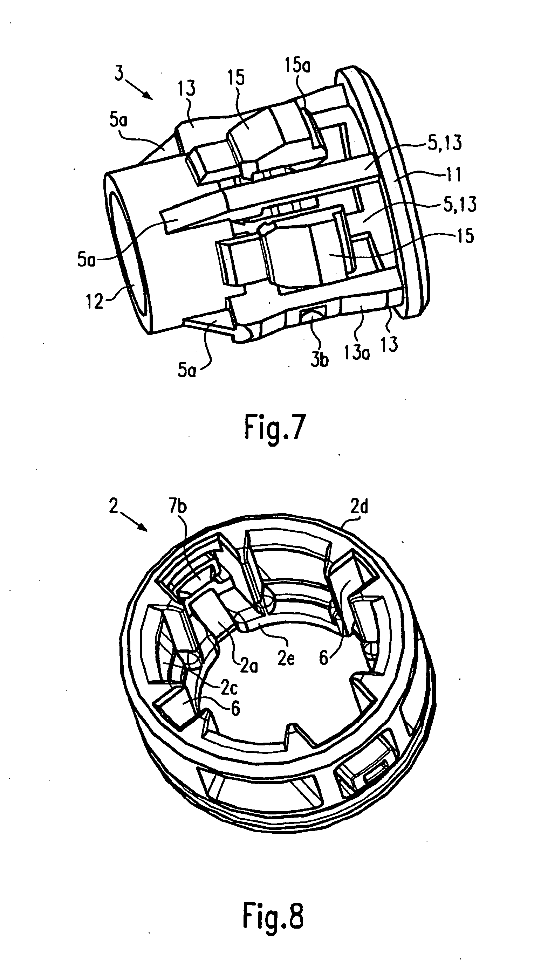

Wie insbesondere in Fig. 7 dargestellt, weist das Innenteil 3 zwei voneinander beabstandete konzentrische Ringabschnitte 11, 12 auf, wobei der von der Einsteckseite (linkes Ende der Kupplungsvorrichtung nach Fig. 7) entfernte Ringabschnitt 12 breiter ist als der näher an der Einsteckseite angeordnete Ringabschnitt 11. Die beiden Ringabschnitte 11, 12 sind durch Stege 13 miteinander verbunden, die in Längsrichtung der Kupplungsvorrichtung angeordnet sind. Die Stege 13 bilden Längsrippen 5, die äquidistant beabstandet auf dem Umfang des ringförmigen Innenteils 3 angeordnet sind.

Die Ringabschnitte 11, 12 sowie die Stege 13, bzw. Längsrippen 5 sind auch in den Figuren 2 bis 4 und 6 im Längsschnitt dargestellt.

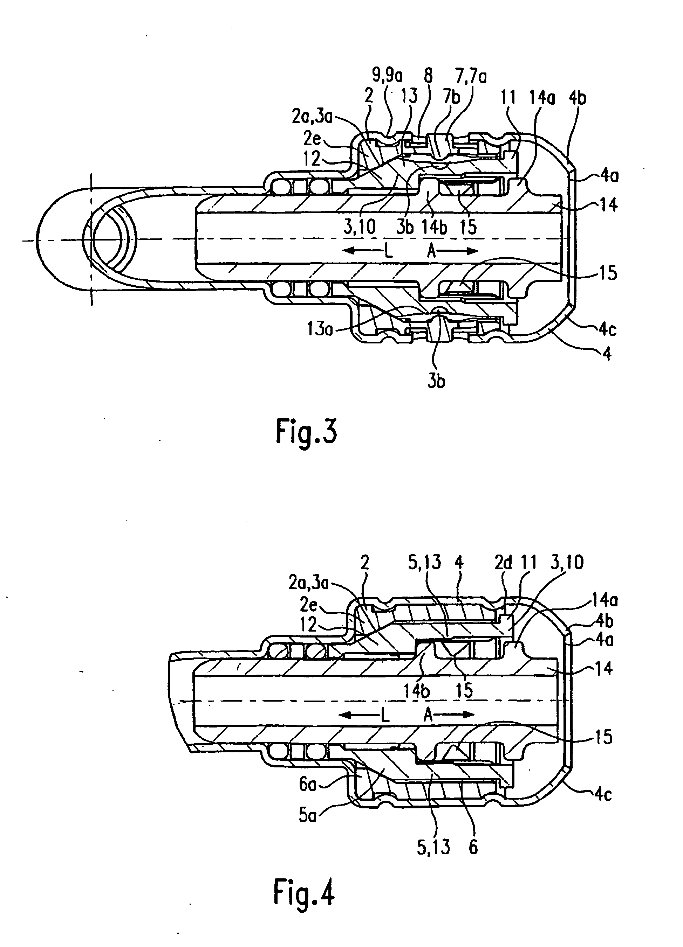

In den Figuren 3, 4 und 7 ist zu erkennen, dass die von der Einsteckseite entfernten Enden 5a der Längsrippen 5 angeschrägt sind und jeweils eine Keilfläche 3a bilden. Die Keilfläche 3a ist also an dem in Arretierbewegungsrichtung A hinteren Ende 5a jeder Längsrippe 5 vorgesehen. Der Neigungswinkel der Keilfläche 3a, d.h. der Winkel zwischen der Keilfläche 3a und der Längsachse der Kupplungsvorrichtung, ist in der Arretierbewegungsrichtung A geöffnet. Der Neigungswinkel beträgt ca. 30° und kann in einem Bereich von 5° bis 45°, einschließlich aller Zwischenwerte innerhalb dieser Grenzen, variiert werden. Je nach Länge oder Durchmesser der Kupplungsvorrichtung können sich andere, insbesondere engere Bereichsgrenzen des Neigungswinkels als zweckmäßig erweisen.

Die in den Keilflächen 3a auslaufenden Längsrippen 5 sind ferner in den Figuren 3, 4 im Längsschnitt dargestellt.

Die Anzahl von vier Stegen 13 kann ebenfalls variiert werden. Es ist auch möglich, nur zwei Stege 13 und im Extremfall lediglich einen Steg 13 zu verwenden. Eine größere Anzahl von Stegen 13 ist ebenfalls möglich.

In Fig. 1 ist weiter zu erkennen, dass die als Längsrippen 5 ausgebildeten Stege 13 einen im wesentlichen rechteckigen Querschnitt mit im wesentlichen gleich langen Kanten aufweisen. Die beiden zwischen den Längsrippen 5 angeordneten Stege 13, die in Fig. 1 auf der Schnittachse III-III angeordnet sind, weisen in Umfangsrichtung erstreckte Kanten auf, die länger sind als die entsprechenden Kanten der Rippen 5. Die zwischen den Längsrippen 5 angeordneten Stege 13 sind deshalb breiter als die Längsrippen 5, wie auch in Fig. 7 zu erkennen.

Die breiteren Stege 13 sind, ebenso wie die Längsrippen 5, mit Keilflächen 3a versehen, die an den jeweils in Arretierbewegungsrichtung A hinteren Enden der breiten Stege 13 angeordnet sind (siehe Fig. 3). In Fig. 7 ist ferner zu sehen, dass die Keilflächen 3a von den breiten Stegen 13 abgesetzt und nicht über die volle Breite der Stege 13 erstreckt sind. Die Breite der Keilflächen 3a, die sich an die breiten Stege 13 anschließen, entspricht im Wesentlichen der Breite der Keilflächen 3a, die an den Längsrippen 5 angeformt sind.

In der radial außen angeordneten Oberfläche der breiten Stege 13 ist eine Ausnehmung in der Form eines Gegenprofils 3b ausgebildet. Dieses Gegenprofil 3b ist für den Eingriff mit einem an einer Taste 7a vorgesehenen Profil 7b vorgesehen und ermöglicht die axiale Fixierung des Innenteils 3 in der Lösestellung. Wie besonders gut in Fig. 3 zu erkennen, ist die Oberfläche 13a der breiten Stege 13 im Bereich des Gegenprofils 13b etwas radial nach innen abgesenkt und bildet eine Ausbuchtung, in der das vorstehende Profil 7b bei nicht betätigter Taste 7a frei bewegbar ist.

In dem Freiraum zwischen jedem breiten Steg 13 und jeder Längsrippe 5 ist eine Raste 15 vorgesehen, die elastisch federnd an dem breiteren Ringabschnitt 12 angebracht ist. Die Rasten 15 sind jeweils in Längsrichtung der Kupplungsvorrichtung erstreckt und äquidistant auf dem Umfang des Ringsabschnitts 12 beabstandet.

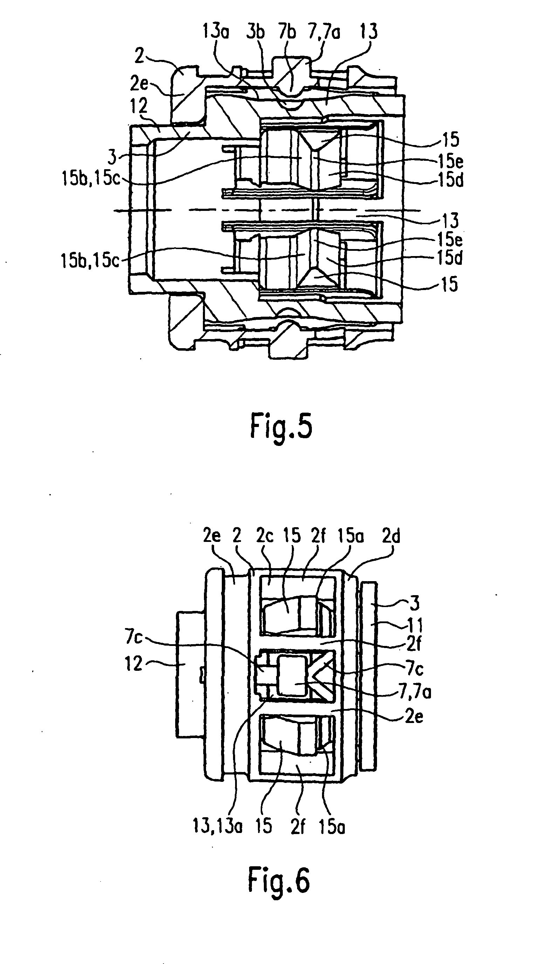

Jede Raste 15 weist ein Arretierelement 15a und einen dem Arretierelement 15a gegenüber angeordneten Mitnehmer 15b auf, wie in Fig. 2 dargestellt. Das Arretierelement 15a ist auf der Außenseite der Raste 15 angeordnet und als radial nach außen abgesetzte Kante bzw. Schulter ausgebildet. Die Schulter des Arretierelementes 15a weist eine radial erstreckte Schulterfläche und eine axial erstreckte Schulterfläche auf. Die Schulter bildet somit einen zur Einsteckseite der Kupplungsvorrichtung (rechtes Ende in Fig. 2) geöffneten Winkel. Das Arretierelement 15a ist auch in den Figuren 6 und 7 zu erkennen.

Auf der Innenseite der Raste 15 ist der Mitnehmer 15b vorgesehen, der einen radial innen angeordneter Anschlag 15c aufweist. Der Anschlag 15c umfasst eine bezüglich der Längsachse der Kupplungsvorrichtung geneigte Fläche, deren Neigungswinkel in der Lösebewegungsrichtung L geöffnet ist. Unter dem Neigungswinkel der Fläche des Anschlags 15c wird der Winkel zwischen der Längsachse der Kupplungsvorrichtung und der Fläche des Anschlags 15c verstanden.

Die Raste 15 weist ferner eine weitere radial innen angeordnete, gegenüber der Längsachse der Kupplungsvorrichtung geneigte Fläche 15d auf, deren Neigungswinkel in der Arretierbewegungsrichtung A geöffnet ist, wie in Fig. 2 dargestellt. Der Anschlag 15c bzw. die geneigte Fläche des Anschlags 15c und die weitere geneigte Fläche 15d bilden einen keilförmigen Vorsprung 15e, der in Fig. 2 dargestellt ist.

Die jeweiligen keilförmigen Vorsprünge 15e der Rasten 15 sind auf einem gedachten kreisförmigen Durchmesser angeordnet, der kleiner ist als der Außendurchmesser des in Fig. 2 dargestellten Bundes 14b des Stutzens 14. Im montierten Zustand hintergreift somit der keilförmige Vorsprung 15e der Raste 15 den Bund 14b.

Der keilförmige Vorsprung 15e der Raste 15 ist ferner in Fig. 5 gezeigt. Das in Fig. 5 gezeigte Ausführungsbeispiel weicht insofern von dem Ausführungsbeispiel nach Fig. 1 ab, als die Keilflächen 3a nur an den Rippen 5 vorgesehen sind.

Im Folgenden wird der Aufbau des Außenteils 2 näher erläutert.

Fig. 6 zeigt, dass das Außenteil 2 zwei Ringabschnitte 2d, 2e umfasst, die konzentrisch angeordnet und voneinander beabstandet sind. Der beiden Ringabschnitte 2d, 2e weisen jeweils eine Nut auf, so dass die beiden Ringabschnitte 2d, 2e mit dem Gehäuse 4 vercrimpt werden können, wie in den Figuren 2 bis 4 dargestellt.

Die beiden Ringabschnitte 2d, 2e sind durch Längsstege 2f verbunden, die äquidistant beabstandet auf dem Umfang der beiden Ringabschnitte 2d, 2e angeordnet sind. Dadurch wird jeweils zwischen zwei Stegen 2f ein Durchbruch 2c gebildet, der im montierten Zustand jeweils einer Raste 15 zugeordnet ist, die teilweise in den jeweiligen Durchbruch 2c hineinragt, wie beispielsweise in Fig. 2 zu erkennen.

Die Stege 2f sind an ihrer Innenseite, d.h. radial nach innen weisend, mit einer Längsnut 6 ausgebildet, deren Breite und Tiefe an die Abmaße der Längsrippen 5 des Innenteils angepasst sind, so dass die Längsrippen 5 in den Längsnuten 6 gleitverschieblich bewegbar sind. Die Anordnung der Längsrippen in den Längsnuten 6 ist besonders gut in Fig. 1 zu erkennen.

Wie ferner in Fig. 4 dargestellt, weist jede Längsnut 6 an ihrem in Arretierbewegungsrichtung A des Innenteils 3 hinteren Ende 6a eine Keilfläche 2a auf. Diese Keilfläche 2a ist komplementär zur Keilfläche 3a der am Innenteil 3 angeformten Längsrippe 5 ausgebildet. Das bedeutet, dass der Neigungswinkel der Keilfläche 2a des Außenteils 2 dem Neigungswinkel der Keilfläche 3a des Innenteils 3 entspricht. Die Keilflächen 2a, 3a liegen somit in der Lösestellung flächig aufeinander.

Ferner ist das Außenteil 2 mit einem Betätigungsmittel 7 versehen, das, wie in den Figuren 1, 3 dargestellt, als Taste 7a ausgebildet ist. Bei dem in den Figuren 1, 3 dargestellten Ausführungsbeispiel sind zwei um 180° versetzte Tasten 7a vorgesehen, die jeweils im Wesentlichen identisch ausgebildet sind. Diese Anordnung der Tasten 7a gestattet eine einfache und ergonomisch günstige manuelle Betätigung. Es ist auch möglich, nur eine Taste 7a vorzusehen.

Die Tasten 7a sind jeweils an einer Längsseite des Außenteils 2 angebracht und können in radialer Richtung bewegt werden (Fig. 3). Dazu ist jede Taste 7a mittels Stegen 7c mit den beiden Ringabschnitten 2d, 2e des Außenteils 2 verbunden, wie in Fig. 6 dargestellt. Dabei sind die die Taste 7a mit dem einsteckseitigen Ringabschnitt 2d verbindenden Stege 7c V-förmig angeordnet. Der die Taste 7a mit dem entfernteren Ringabschnitt 2e verbindende Steg 7c ist etwas breiter als die V-förmigen Stege 7c ausgebildet. Die Stege 7c sind elastisch und gestatten eine Verschiebung der Taste 7a bei deren Betätigung in radialer Richtung des Außenteils 2.

In den Figuren 1, 3 ist ferner dargestellt, dass die Taste 7a ein radial innen angeordnetes Profil 7b in der Form eines Vorsprungs aufweist. Die Kontur des Profils 7b entspricht im Wesentlichen der Kontur des am Innenteil 3 ausgebildeten Gegenprofils 3b, wie in Fig. 3 gezeigt. In der Lösestellung sind das Profil 7b der Taste 7a und das Gegenprofil 3b des Innenteils 3 in Gegenüberstellung angeordnet, so dass bei Betätigung der Taste 7a das Profil 7b in das Gegenprofil 3b eingreift und das Innenteil 3 mit dem Außenteil 2 verriegelt. Dadurch wird eine axiale Bewegung des Innenteils 3 verhindert und das Innenteil 3 in der Lösestellung gehalten.

Es ist auch möglich, das Profil 7b und das Gegenprofil 3b auf andere Weise auszubilden. Beispielsweise kann am Innenteil 3 ein Vorsprung und an der radial innen angeordneten Fläche der Taste 7a eine komplementär geformte Ausnehmung vorgesehen sein, die miteinander bei Betätigung der Taste 7a in Eingriff gebracht werden können. Ferner ist es möglich, anstelle der vorstehend beschriebenen formschlüssigen Verbindung zwischen dem Außenteil 2 und dem Innenteil 3 eine reibschlüssige Verbindung bei Betätigung der Taste 7a herzustellen, wodurch ebenfalls eine axiale Bewegung des Innenteils 3 verhindert wird.

In den Figuren 3 und 8 ist dargestellt, dass der in Arretierbewegungsrichtung hintere Ringabschnitt 2e im Bereich des Betätigungsmittels 7, d.h. axial fluchtend mit der Taste 7a, eine Keilfläche 2a aufweist. Diese Keilfläche 2a ist komplementär zur Keilfläche 3a am Innenteil 3 ausgebildet, wie in Fig. 3 dargestellt. Die axiale Anordnung der Keilfläche 2a bezüglich der Taste 7a ist in Fig. 8 dargestellt. Das bedeutet, dass der in Arretierbewegungsrichtung A hintere Ringabschnitt 2e des Außenteils 2 in Arretierbewegungsrichtung A, d.h. in Richtung der Taste 7a, verjüngt ist. Der Neigungswinkel der Keilfläche 2a des Außenteils 2 entspricht dem Neigungswinkel der komplementären Keilfläche 3a des Innenteils 3.

Es ist auch möglich, nur die zwischen den Tasten 7a angeordneten Längsnuten 6 mit entsprechenden Keilflächen 2a zu versehen und den in Arretierbewegungsrichtung A hinteren Ringabschnitt 2e des Außenteils 2 mit einer quer zur Längsrichtung des Außenteils 2 erstreckten Anschlagfläche auszubilden, wie in Fig. 5 dargestellt.

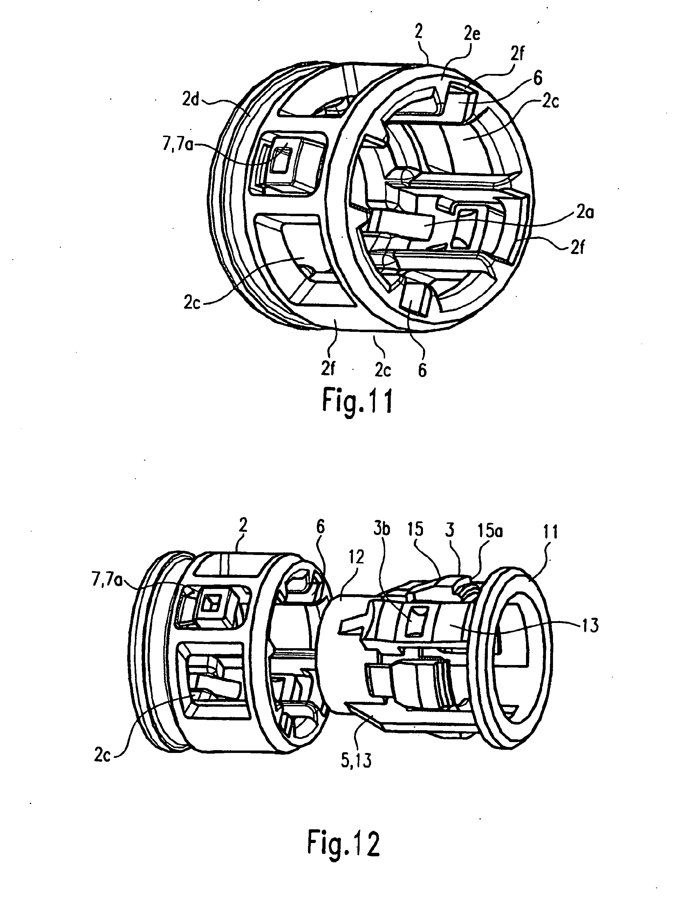

Das Außenteil 2 kann eine zusätzliche Sicherung gegen Versagen bei Verformung der Kupplungsvorrichtung durch einen Unfall aufweisen. Diese zusätzliche Sicherung umfasst einen Rasthaken, der an einem der Stege 2f zwischen zwei Durchbrüchen 2c vorgesehen ist und radial nach innen vorsteht. Der Rasthaken hintergreift den Bund 14a eines in die Kupplungsvorrichtung eingeführten Stutzens 14 oder eines Leitungsendes und verhindert zusätzliche, dass die Leitung aus der Kupplungsvorrichtung herausgezogen werden kann, wenn diese verformt wird. Dazu hat der Rasthaken eine im Wesentlichen keilförmige Gestalt, wobei eine Schrägfläche des Rasthakens im Wesentlichen in axialer Richtung erstreckt und in der Arretierbewegungsrichtung A verjüngt ist, wie in Fig. 11 gezeigt. Dadurch kann der Bund 14a des Stutzens 14 leicht über den Rasthaken beim Einstecken desselben in die Kupplungsvorrichtung geschoben werden. Der Rasthaken umfasst ferner eine im Wesentlichen senkrecht zur Längsrichtung des Außenteils 2 angeordnete Anschlagfläche, die mit dem Bund 14a des Stutzens 14 zusammenwirkt und ein Herausziehen desselben verhindert.

Im Folgenden wird die Ausgestaltung des Gehäuses 4 erläutert.

In den Figuren 2 bis 4 und 10 ist dargestellt, dass das Gehäuse 4 eine Öffnung 4a zum Einstecken eines Stutzens 14 oder eines Leitungsendes in die Kupplungsvorrichtung aufweist,
wobei der Durchmesser der Einstecköffnung 4a derart an den Durchmesser des Bundes 14a des Stutzens 14 angepasst ist, dass der Bund 14a bei einer Verformung des Gehäuses 4 eine Kante 4b der Öffnung 4a hintergreift, so dass ein Trennen der Leitung und der Kupplungsvorrichtung verhindert wird, wenn das Gehäuse 4 verformt ist. Dazu ist das im Bereich der Halteeinrichtung 1 zylindrisch ausgebildete Gehäuse 4 an dessen einsteckseitigen Ende 4c radial nach innen gebogen. Der Durchmesser der Einstecköffnung 4e ist geringfügig größer als der Durchmesser des Bundes 14a. Insbesondere ist der Durchmesser der Öffnung 4a in dem Betrag von 0,1 bis 1 mm, insbesondere von 0,4 bis 0,8 mm, größer als der Durchmesser des Bundes 14a.

Im unverformten Zustand sind die radiale Außenseite des Bundes 14a und die Öffnung 4a des Gehäuses 4 konzentrisch angeordnet, so dass der Bund 14a durch die Öffnung 4a in das Gehäuse 4 eingeführt werden kann. Bei einer Verformung des Gehäuses 4 wird die konzentrische Anordnung des Bundes 14a und der Öffnung 4a verändert, so dass der Bund 14a und das Gehäuse 4a exzentrisch zueinander angeordnet sind. Dadurch wird erreicht, dass der Bund 14a zumindest teilweise die Kante 4b der Öffnung 4a hintergreift, wodurch eine wirksame Auszugsicherung geschaffen wird.

Aufgrund der geringfügigen Durchmesserdifferenz zwischen der Öffnung 4a und dem Bund 14a führt auch eine leichte Verformung des einsteckseitigen Endes 4c im Bereich der Öffnung 4a zu dem gewünschten Effekt, da die Öffnung 4a ihren kreisförmigen Querschnitt verliert, so dass das kreisförmige Profil des Bundes 14a die Kante 4b der verformten Öffnung 4a stellenweise hintergreift und ein Herausziehen des Stutzens 14 bzw. des Leitungsendes aus der Kupplungsvorrichtung verhindert wird.

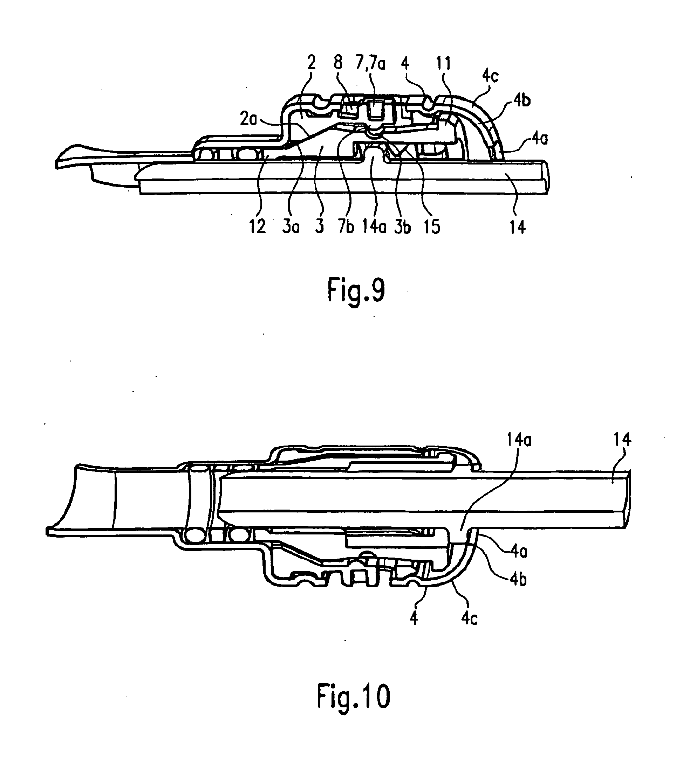

Die Anordnung des Stutzens 14 und des Gehäuses 4 im unverformten und verformten Zustand sind in den Figuren 9 und 10 dargestellt. Insbesondere in Fig. 10 ist gezeigt, dass der Bund 14a die Kante 4b der Öffnung 4a im verformten Zustand des Gehäuses 4 hintergreift, wodurch eine axiale Bewegung des Stutzens 14, d.h. ein Herausziehen des Stutzens 14 aus der Kupplungsvorrichtung, unterbunden wird.

Das Gehäuse 4 ist im Bereich der Halteeinrichtung mit einem zylindrischen Abschnitt 9 (s. Figur 3) ausgebildet, wobei in der Mantelfläche 9a des Abschnittes 9 zwei um 180° versetzte radiale Öffnungen 8 vorgesehen sind. Im montierten Zustand sind die Tasten 7a in diesen Öffnungen 8 angeordnet und somit zur Betätigung zugänglich.

Das vorstehend beschriebene Gehäuse 4 kann mit einem Stutzen 14 kombiniert werden, der entweder einen Bund 14a (Figuren 9, 10) oder zwei Bünde 14a, 14b (Figuren 2 bis 4) aufweist. Im Fall des Stutzens 14 mit nur einem Bund 14a fungiert der eine Bund 14a sowohl zur Betätigung des Mitnehmers 15b der Taste 15 am Innenteil 3 als auch als Auszugsicherung in Verbindung mit der (verformten) Kante 4b der Öffnung 4a des Gehäuses 4. Im Fall des Stutzens 14 mit zwei Bünden 14a, 14b sind die vorstehend erläuterten Funktionen getrennt, wobei der in Arretierbewegungsrichtung A hintere Bund 14b mit dem Mitnehmer 15b der Raste 15 und der in Arretierbewegungsrichtung A vordere Bund 14a mit der (verformten) Kante 4b der Öffnung 4a zusammenwirkt.

Die vorstehend beschriebenen Elemente sind im montierten Zustand wie folgt angeordnet.

Im montierten Zustand ist der Stutzen 14 in das Innenteil 3 eingesteckt, das im Außenteil 2 gehalten ist. Das Außenteil 2 ist mit dem Gehäuse 4 fest verbunden, beispielsweise durch Vercrimpen. Wie in den Figuren 1, 2 und 6 dargestellt, sind die Längsrippen 5 des Innenteils 3 in den Längsnuten 6 des Außenteils 2 längsverschieblich geführt, wobei die Rasten 15 in den Durchbrüchen 2c des Außenteils 2 angeordnet sind und teilweise in diese hineinragen.

Die Rasten 15 ragen dabei jeweils so weit in die jeweiligen Durchbrüche 2c, dass der ringförmige Anschlag 2b des Außenteils 2, insbesondere die radial innen angeordnete Kante des Anschlags 2b in das Arretierelement 15a eingreifen kann. Dazu ist die Kante des Anschlags 2b des Außenteils 2 geringfügig weiter radial außen angeordnet als die in Längsrichtung erstreckte Schulterfläche des Anschlags 15, wie in Fig. 2 dargestellt. Dadurch können die in radialer Richtung erstreckte Schulterfläche des Arretierelements 15a und die ebenfalls in radialer Richtung erstreckte Anschlagfläche des Anschlags 2b in Berührung kommen, wodurch eine weitere axiale Bewegung des Innenteils 3 in die Arretierbewegungsrichtung A verhindert wird.

Ferner ist einer der beiden Bünde 14a, 14b, nämlich der in Arretierbewegungsrichtung A hintere Bund 14b in Arretierbewegungsrichtung A hinter dem Mitnehmer 15b der Raste 15 angeordnet, wie in Fig. 2 dargestellt.

### Die Funktionsweise der Kupplungsvorrichtung wird im Folgenden erläutert:

Das Innenteil 3 wird dadurch in die Arretierstellung gebracht, dass der Stutzen 14 in Arretierbewegungsrichtung A verschoben wird. Dadurch kommt der Bund 14b in Anschlag mit dem Mitnehmer 15b der Raste 15, insbesondere mit der geneigten Anschlagfläche 15c. Durch die in Arretierbewegungsrichtung A ausgeführte Verschiebung des Stutzens 14 wird das Innenteil 3 mitgenommen und führt ebenfalls eine axiale Bewegung in Arretierbewegungsrichtung A aus. Dabei soll die Federkraft der Raste 15 so eingestellt sein, dass ein radiales Ausweichen der Raste 15 aufgrund der in Arretierbewegungsrichtung A auf die Raste 15 vom Stutzen 14 übertragenen Kraft nicht erfolgt. In der Arretierstellung ist das Arretierelement 15a in Eingriff mit dem Anschlag 2b des Außenteils 2. Dabei greift die Kante des Anschlags 2b des Außenteils 2 in das schulterförmige Arretierelement 15a ein, so dass sowohl eine axiale Bewegung des Innenteils als auch eine radiale Ausweichbewegung der Raste 15 verhindert wird. Dadurch wird der Mitnehmer 15b bzw. die schräge Anschlagfläche 15c der Raste 15 sowohl in axialer als auch in radialer Richtung arretiert, so dass ein Herausziehen des Stutzens 14 aus der Kupplungsvorrichtung verhindert wird.

Durch Verschieben des Innenteils 3 in der Lösebewegungsrichtung L kommt das Arretierelement 15a der Raste 15 vom Anschlag 2b des Außenteils 2 frei, wodurch eine radial nach außen gerichtete Öffnungsbewegung der Raste 15 im jeweiligen Durchbruch 2c des Außenteils 2 ermöglicht wird. Die zur Verschiebung des Innenteils 3 in die Lösestellung erforderliche axiale Kraft kann entweder direkt in das Innenteil 3 oder über den Stutzen 14 in das Innenteil 3 eingeleitet werden. Dabei schlägt der Bund 14b des Stutzens 14 an einem geeigneten Anschlag des Innenteils 3 an und bewegt diesen durch eine entsprechende Bewegung des Stutzens 14 in die Lösebewegungsrichtung L in die Kupplungsvorrichtung hinein. Die Lösestellung ist erreicht, wenn das an der Taste 7a vorgesehene Profil 7b und das Gegenprofil 3b des Innenteils. 3 in Gegenüberstellung angeordnet (Fig. 3) und die Keilflächen 2a, 3a des Außenteils 2 bzw. des Innenteils 3 in Kontakt sind (Figuren 3, 4).

Zum Lösen wird die Taste 7a betätigt, so dass das Profil 7b und das Gegenprofil 3b formschlüssig verbunden werden und eine axiale Verschiebebewegung des Innenteils 3 verhindert wird, so dass dieses in der Lösestellung gehalten wird. Dann kann der Stutzen 14 entgegen der Lösebewegungsrichtung L, d.h. in der Arretierbewegungsrichtung A aus der Kupplungsvorrichtung herausgezogen werden, ohne dass das Innenteil 3 in die Arretierstellung bewegt wird. Durch die axiale Bewegung des Stutzens 14 werden die Rasten 15 aufgespreizt, wobei der Bund 14b an der geneigten Anschlagfläche 15c des Mitnehmers 15b entlanggleitet. Nachdem der Bund 14b den radial nach innen erstreckten keilförmigen Vorsprung 15e der Raste 15 überwunden hat, kann der Stutzen 14 widerstandsfrei aus der Kupplungsvorrichtung abgezogen werden.

Bei der Zwangsverriegelung der Kupplungsvorrichtung, ausgelöst durch eine Verformung des Gehäuses 4, wird das Innenteil 3 zwangsweise aus der Lösestellung in die Arretierstellung verschoben und dort gehalten. Dazu wirken die Keilflächen 2a des Außenteils mit den Keilflächen 3a des Innenteils zusammen. Durch die Verformung des Gehäuses 4 werden die in Arretierbewegungsrichtung A hinteren Ringabschnitte 2e des Außenteils 2 und 12 des Innenteils 3 mit einer im Wesentlichen in radialer Richtung wirkenden Kraft beaufschlagt. Aufgrund der in Längsrichtung der Kupplungsvorrichtung geneigten Keilfläche 2a, 3a wird eine in Arretierbewegungsrichtung A gerichtete Axialkraft erzeugt, die das Innenteil 3 in die Arretierstellung zwangsverschiebt und das Innenteil in der Arretierstellung festlegt.

Bei dem beschriebenen Ausführungsbeispiel ist das Außenteil 2 im Gehäuse 4 fixiert und bezogen auf das axial bewegliche Innenteil 3 ortsfest angeordnet. Bei dieser Anordnung des Außenteils 2 und des Innenteils 3 wird die in Arretierbewegungsrichtung A gerichtete Axialkraft dadurch erzeugt, dass der Neigungswinkel der Keilflächen 2a, 3a in der Arretierbewegungsrichtung A des Innenteils geöffnet ist.

Es ist auch möglich, das Innenteil 3, bezogen auf das Außenteil 2, ortsfest, d.h. mit dem Gehäuse fest verbunden, vorzusehen, wobei das Außenteil 2 in die Arretierstellung bewegt wird. In diesem Fall wäre die Ausrichtung des Neigungswinkels der Keilflächen entsprechend anzupassen, um eine bei Verformung des Gehäuses in die Arretierbewegungsrichtung wirkende Axialkraft zu erzeugen.

Generell kommt es darauf an, dass eine Relativbewegung zwischen dem Innenteil 3 und dem Außenteil stattfindet, so dass zwei unterschiedliche Positionen (Lösestellung und Arretierstellung) eingenommen werden können.

Durch die Anpassung des Durchmessers der Öffnung 4a des einsteckseitigen Endes 4c des Gehäuses 4 wird eine zusätzliche Auszugsicherung geschaffen, die eingreift, wenn die vorstehend beschriebene Zwangsverriegelung versagt. Da bei einer Verformung des Gehäuses 4 die Öffnung 4a ebenfalls verformt wird, so dass der ursprüngliche kreisförmige Querschnitt der Öffnung 4a verändert wird, wird erreicht, dass der Bund 14a des Stutzens 14 die Kante 4b der Öffnung 4a hintergreift und am Herausrutschen aus der Kupplungsvorrichtung gehindert wird (Fig. 10).

Es hat sich als zweckmäßig erwiesen, wenn das Innenteil 3 zwei um 180° versetzte Stege 13 mit Längsrippen 5 sowie zwei ebenfalls um 180° versetzte breitere Stege 13 aufweist, die jeweils mit einem Betätigungsmittel 7 versehen sind. Die breiten Stege 13 und die als Längsrippen 5 ausgebildeten Stege sind jeweils um 90° zueinander versetzt auf dem Umfang des Innenteils 3 angeordnet. Die jeweils zugeordneten Längsnuten 6 des Außenteils 2 sind an die Maße der Längsrippen bzw. der breiten Stege 13 angepasst und gestatten die längsverschiebliche Führung des Innenteils 3 im Außenteil 2. Eine andere Anzahl von Stegen 13, beispielsweise mehr als zwei Stege 13 mit den Längsrippen 5 oder mehr als zwei breite Stege 13 mit Betätigungsmitteln 7 ist möglich. Es ist auch möglich, nur zwei breite Stege 13 vorzusehen, die um 180° versetzt auf dem Umfang des Innenteils 3 angeordnet sind. In diesem Fall könnten die jeweils auf einer Seite angeordneten Rasten 15 zu einer halbkreisförmigen Raste 15 verbunden werden, so dass das Innenteil 3 zwei sich über einen größeren Teil des Umfangs erstreckende Rasten aufweist. Die Keilflächen 2a, 3a können nur an den Längsrippen 5 oder nur im Anschluss an das Betätigungsmittel 7 vorgesehen sein. Die Keilflächen 2a, 3a können in ihrer Breite der Breite der Längsrippen 5 entsprechen. Es ist auch möglich, die Keilflächen 2a, 3a mit einer größeren Breite auszubilden, so dass die Keilflächen 2a, 3a über einen größeren Teil des Umfangs des Innenteils 3 erstreckt sind.

Die Form des Profils 7b an der Taste 7a kann beliebig variiert werden, wobei gewährleistet sein muss, dass das Profil 7b und das Gegenprofil 3b im Innenteil 3 formschlüssig in Eingriff gebracht werden können. Anstelle der Festlegung des Innenteils 3 bezüglich des Außenteils 2 durch eine formschlüssig Verbindung kann eine axiale Fixierung des Innenteils auch durch eine reibschlüssige Verbindung bei Betätigung der Taste 7a des Außenteils 2 erfolgen.

Die Anpassung des Durchmessers der Öffnung 4a an den Außendurchmesser des Bundes 14a kann durch einfaches Umbiegen des einsteckseitigen Endes 4c des Gehäuses 4 erfolgen. In diesem Fall ist das Gehäuse 4 einstückig aufgebaut. Anstelle des einstückigen Gehäuseaufbaus kann das Gehäuse auch zweiteilig aufgebaut sein, wobei anstelle des radial nach innen gebogenen Endes 4c des Gehäuses 4 ein geeigneter Aufsatz vorgesehen ist, der mit dem Gehäuse 4 verbunden werden kann und eine im Hinblick auf den Durchmesser angepasste Einstecköffnung aufweist.

Die Kupplungsvorrichtung ist zur Verbindung mit einem Stutzen 14 geeignet, an den eine Leitung angeschlossen werden kann. Die Kupplungsvorrichtung ist ferner zur Verbindung mit einem geeignet profilierten Leitungsende geeignet.

Insgesamt kommt es darauf an, dass die durch Verformung des Gehäuses erzeugte Radialkraft in eine Radialkomponente und eine Axialkomponente aufgespalten wird. Dies kann generell auch dadurch erreicht werden, dass eine der beiden komplementär ausgebildeten Keilflächen durch ein gleichwirkendes Element ausgetauscht wird, so dass nur eine Keilfläche vorgesehen ist. Beispielsweise könnte nur am Außenteil 2 die Keilfläche 2a vorgesehen sein und die Keilfläche 3a des Innenteils 3 durch eine am Innenteil 3 ausgebildete Radialkante ersetzt sein, die im Bereich der Keilfläche 2a des Außenteils 2 angeordnet ist.

Es wäre auch möglich, nur die Keilfläche 3a des Innenteils 3 vorzusehen und anstelle der Keilfläche 2a des Außenteils 2 einen Vorsprung im Bereich der Keilfläche 3a des Innenteils 3 anzubringen, der in der Lösestellung mit der Keilfläche 3a des Innenteils 3 in Berührung ist.

In beiden Fällen würde durch die einzige Keilfläche die durch Verformung des Gehäuses eingeleitete Radialkraft in eine axial gerichtete Kraft umgewandelt werden, die zur Verschiebung des Innenteils in die Arretierstellung genutzt werden kann. Dabei würde es nicht zu einer flächigen, sondern zu einer linienförmigen Berührung zwischen der Keilfläche und dem Austauschelement kommen, die im Hinblick auf die Stabilität der Gesamtanordnung weniger vorteilhaft ist als die mit den beiden Keilflächen 2a, 3a erzeugte Flächenpressung. Die Wirkung, das Innenteil 3 bzw. das Außenteil 2 in die Arretierstellung zwangszuverschieben, würde jedoch auch bei Verwendung nur einer Keilfläche erzielbar sein.

Die Kupplungsvorrichtung kann auf allen Gebieten eingesetzt werden, auf denen fluidführende Leitungen miteinander gekoppelt werden. Die Kupplungsvorrichtung ist insbesondere für die Automobilindustrie, beispielsweise zum Verbinden von Kraftstoffleitungen, vorgesehen.

## Patentansprüche

1. Kupplungsvorrichtung zum Verbinden von Leitungen mit
- einem Gehäuse (4), in dem eine Öffnung (4a) vorgesehen ist,
- einer Halteeinrichtung (1), die im Gehäuse (4) angeordnet ist, und
- einem Leitungsende oder einem Stutzen (14), der in das Gehäuse (4) durch die Öffnung (4a) einführbar und mit der Halteeinrichtung (1) arretierbar ist, wobei das Leitungsende bzw. der Stutzen (14) wenigstens einen Bund (14a, 14b) aufweist, und das Gehäuse (4) im Bereich der Halteeinrichtung (1) zylindrisch ausgebildet und zur Bildung der Öffnung (4a) an dessen Ende (4c) radial nach innen gebogen ist,
**dadurch gekennzeichnet, dass** der Durchmesser der Öffnung (4a) derart an den Durchmesser des Bundes (14a, 14b) angepasst ist, dass der Bund (14a, 14b) bei einer Verformung des Gehäuses (4), die die konzentrische Anordnung des Bundes (14a) und der Öffnung (4a) verändert, eine Kante (4b) der Öffnung (4a) hintergreift.

2. Kupplungsvorrichtung nach Anspruch 1, **dadurch gekennzeichnet, dass** der Durchmesser der Öffnung (4a) um einen Betrag von 0,1 bis 1 mm, insbesondere von 0,4 bis 0,8 mm größer als der Durchmesser des Bundes (14a, 14b) ist.

3. Kupplungsvorrichtung nach Anspruch 1 oder 2, **dadurch gekennzeichnet, dass** ein Innenteil (3) zwischen einer Arretierstellung und einer Lösestellung in Längsrichtung der Halteeinrichtung (1) bewegbar ist.

4. Kupplungsvorrichtung nach Anspruch 3, **dadurch gekennzeichnet, dass** ein Außenteil (2) wenigstens ein Betätigungsmittel (7) zum Fixieren des Innenteils (3) aufweist.

5. Kupplungsvorrichtung nach Anspruch 4, **dadurch gekennzeichnet, dass** das Betätigungsmittel (7) im Bereich einer im Gehäuse (4) vorgesehenen Öffnung (8) angeordnet ist.

6. Kupplungsvorrichtung nach Anspruch 5, **dadurch gekennzeichnet, dass** ein Abschnitt (9) des Gehäuses (4) zumindest im Bereich der Halteeinrichtung (1) zylindrisch ausgebildet ist, wobei die Öffnung (8) in der Mantelfläche (9a) des Abschnitts (9) angeordnet ist.

7. Kupplungsvorrichtung nach wenigstens einem der Ansprüche 4 bis 6, **dadurch gekennzeichnet, dass** das Betätigungsmittel (7) wenigstens eine radial bewegbare Taste (7a) aufweist, die mit dem Innenteil (3), insbesondere in der Lösestellung, formschüssig oder reibschlüssig, in Eingriff bringbar ist.

8. Kupplungsvorrichtung nach Anspruch 7, **dadurch gekennzeichnet, dass** die Taste (7a) ein Profil (7b), insbesondere einen Vorsprung oder eine Ausnehmung, und das Innenteil (3) ein passendes Gegenprofil (3b), insbesondere eine Ausnehmung oder einen Vorsprung, aufweisen, die in der Lösestellung gegenüber angeordnet und durch Betätigen der Taste (7a) in Eingriff bringbar sind.

9. Kupplungsvorrichtung nach Anspruch 8, **dadurch gekennzeichnet, dass** das Innenteil (3) ein Halteelement (10) mit zwei konzentrisch angeordneten und beabstandeten Ringabschnitten (11, 12) umfasst, die durch in Längsrichtung der Halteeinrichtung (1) angeordnete Stege (13) verbunden sind, wobei das Gegenprofil (3b) in wenigstens einem der Stege (13) ausgebildet ist.

10. Kupplungsvorrichtung nach Anspruch 9, **dadurch gekennzeichnet, dass** eine Oberfläche (13a) des Steges (13), in dem das Gegenprofil (3b) ausgebildet ist, im Bereich des Gegenprofils (3b) radial nach innen abgesenkt ist.

11. Kupplungsvorrichtung nach wenigstens einem der Ansprüche 3 bis 10, **dadurch gekennzeichnet, dass** wenigstens eine, bezogen auf die Längsachse der Halteeinrichtung, geneigt angeordnete Keilfläche (2a) am Außenteil (2) vorgesehen ist, die mit wenigstens einer komplementär ausgebildeten Keilfläche (3a) zusammenwirkt, die am Innenteil (3) vorgesehen ist.

12. Kupplungsvorrichtung nach Anspruch 11, **dadurch gekennzeichnet, dass** das Außenteil (2) im Gehäuse (4) fixiert und das Innenteil (3) in die Arretierstellung und Lösestellung bewegbar ist, wobei der Neigungswinkel der Keilflächen (2a, 3a) in der Arretierbewegungsrichtung des Innenteils (3) geöffnet ist.

13. Kupplungsvorrichtung nach Anspruch 11 oder 12, **dadurch gekennzeichnet, dass** die am Innenteil (3) vorgesehene wenigstens eine Keilfläche (3a) an einem in Arretierbewegungsrichtung des Innenteils (3) hinteren Ende (5a) wenigstens einer am Innenteil (3) angeformten Längsrippe (5) ausgebildet ist.

14. Kupplungsvorrichtung nach Anspruch 13, **dadurch gekennzeichnet, dass** das Innenteil (3) zwei, drei oder vier Längsrippen (5) aufweist, die jeweils mit einer Keilfläche (3a) ausgebildet sind.

15. Kupplungsvorrichtung nach Anspruch 13 oder 14, **dadurch gekennzeichnet, dass** die am Außenteil (2) vorgesehene wenigstens eine Keilfläche (2a) an einem in Arretierbewegungsrichtung des Innenteils (3) hinteren Ende (6a) wenigstens einer Längsnut (6) ausgebildet ist, in der die wenigstens eine Längsrippe (5) gleitverschieblich bewegbar ist.

16. Kupplungsvorrichtung nach Anspruch 15, **dadurch gekennzeichnet, dass** eine der Anzahl der Längsrippen (5) entsprechende Anzahl von Längsnuten (6) vorgesehen ist.

17. Kupplungsvorrichtung nach wenigstens einem der Ansprüche 3 bis 16, **dadurch gekennzeichnet, dass** das Innenteil (3) wenigstens eine Raste (15) mit einem radial außen angeordneten Arretierelement (15a) und das Außenteil (2) wenigstens einen Anschlag (2b) aufweist, wobei das Arretierelement (15a) und der Anschlag (2b) in der Arretierstellung zusammenwirken und in der Lösestellung getrennt sind.

18. Kupplungsvorrichtung nach Anspruch 17, **dadurch gekennzeichnet, dass** die wenigstens eine Raste (15) einen Mitnehmer (15b) mit einem radial innen angeordneten Anschlag (15c) aufweist, der entgegen der Arretierbewegungsrichtung des Innenteils (3) angeordnet ist.

19. Kupplungsvorrichtung nach Anspruch 18, **dadurch gekennzeichnet, dass** die wenigstens eine Raste (15) radial federnd ausgebildet ist.

20. Kraftfahrzeug mit einer Kupplungsvorrichtung nach wenigstens einem der Ansprüche 1 bis 19.

## Claims

1. Coupling device for the connection of lines with
- a housing (4), in which an opening (4a) is provided,
- a retaining mechanism (1), which is arranged in the housing (4), and
- a line end or a connecting piece (14), which can be introduced into the housing (4) through the opening (4a) and locked with the retaining mechanism (1), wherein the line end or the connecting piece (14) comprises at least one collar (14a, 14b), and in the region of the retaining mechanism (1) the housing (4) is of cylindrical formation and is bent radially inwards in order to form the opening (4a) at the end (4c) thereof,
**characterised in that** the diameter of the opening (4a) is adapted to the diameter of the collar (14a, 14b) such that the collar (14a, 14b) engages behind an edge (4b) of the opening (4a) when the housing (4) undergoes deformation, which changes the concentric arrangement of the collar (14a) and of the opening (4a).

2. Coupling device according to Claim 1, **characterised in that** the diameter of the opening (4a) is larger than the diameter of the collar (14a, 14b) by a value of 0.1 to 1 mm, in particular of 0.4 to 0.8 mm.

3. Coupling device according to Claim 1 or 2, **characterised in that** an inner part (3) can move in the longitudinal direction of the retaining mechanism (1) between a locking position and a release position.

4. Coupling device according to Claim 3, **characterised in that** an outer part (2) comprises at least one actuating means (7) for fixing the inner part (3).

5. Coupling device according to Claim 4, **characterised in that** the actuating means (7) is arranged in the region of an opening (8) provided in the housing (4).

6. Coupling device according to Claim 5, **characterised in that** a portion (9) of the housing (4) is of cylindrical formation at least in the region of the retaining mechanism (1), wherein the opening (8) is arranged in the circumferential surface (9a) of the portion (9).

7. Coupling device according to at least one of Claims 4 to 6, **characterised in that** the actuating means (7) comprises at least one radially mobile button (7a), which can be brought into engagement in a positive or frictional manner with the inner part (3), in particular in the release position.

8. Coupling device according to Claim 7, **characterised in that** the button (7a) comprises a profile (7b), in particular a projection or a recess, and the inner part (3) comprises a matching mating profile (3b), in particular a recess or a projection, which are arranged opposite one another in the release position and can be brought into engagement by actuating the button (7a).

9. Coupling device according to Claim 8, **characterised in that** the inner part (3) comprises a retaining element (10) with two concentrically arranged and spaced annular portions (11, 12), which are connected by webs (13) arranged in the longitudinal direction of the retaining mechanism (1), wherein the mating profile (3b) is formed in at least one of the webs (13).

10. Coupling device according to Claim 9, **characterised in that** a surface (13a) of the web (13), in which the mating profile (3b) is formed, is lowered radially inwards in the region of the mating profile (3b).

11. Coupling device according to at least one of Claims 3 to 10, **characterised in that** at least one wedge surface (2a), which is arranged at an inclination relative to the longitudinal axis of the retaining mechanism, is provided on the outer part (2) and interacts with at least one wedge surface (3a) formed in a complementary manner and provided on the inner part (3).

12. Coupling device according to Claim 11, **characterised in that** the outer part (2) is fixed in the housing (4) and the inner part (3) can move into the locking position and release position, wherein the angle of inclination of the wedge surfaces (2a, 3a) is open in the locking movement direction of the inner part (3).

13. Coupling device according to Claim 11 or 12, **characterised in that** the at least one wedge surface (3a) provided on the inner part (3) is formed on an end (5a), which is at the rear in the locking movement direction of the inner part (3), of at least one longitudinal rib (5) formed on the inner part (3).

14. Coupling device according to Claim 13, **characterised in that** the inner part (3) comprises two, three or four longitudinal ribs (5), which are in each case formed with a wedge surface (3a).

15. Coupling device according to Claim 13 or 14, **characterised in that** the at least one wedge surface (2a) provided on the outer part (2) is formed on an end (6a), which is at the rear in the locking movement direction of the inner part (3), of at least one longitudinal groove (6), in which the at least one longitudinal rib (5) can move in a sliding manner.

16. Coupling device according to Claim 15, **characterised in that** a number of longitudinal grooves (6) corresponding to the number of longitudinal ribs (5) is provided.

17. Coupling device according to at least one of Claims 3 to 16, **characterised in that** the inner part (3) comprises at least one catch (15) with a locking element (15a) arranged radially on the outside and the outer part (2) comprises at least one stop (2b), wherein the locking element (15a) and the stop (2b) interact in the locking position and are separated in the release position.

18. Coupling device according to Claim 17, **characterised in that** the at least one catch (15) comprises a driver (15b) with a stop (15c) arranged radially on the inside and against the locking movement direction of the inner part (3).

19. Coupling device according to Claim 18, **characterised in that** the at least one catch (15) is formed so as to be radially resilient.

20. Motor vehicle with a coupling device according to at least one of Claims 1 to 19.

## Revendications

1. Dispositif d'accouplement pour relier des conduites, avec
- un boîtier (4) dans lequel est prévue une ouverture (4a),
- un dispositif de fixation (1) qui est disposé dans le boîtier (4), et
- une extrémité de conduite ou une tubulure (14) qui est apte à être introduite dans le boîtier (4) par l'ouverture (4a) et à être arrêtée avec le dispositif de fixation (1), l'extrémité de conduite ou la tubulure (14) présentant un collet (14a, 14b) et le boîtier (4) étant cylindrique dans la zone du dispositif de fixation (1) et étant courbé radialement vers l'intérieur pour former l'ouverture (4a) à son extrémité (4c),
**caractérisé en ce que** le diamètre de l'ouverture (4a) est adapté au diamètre du collet (14a, 14b) de telle sorte que le collet (14a, 14b) vienne s'accrocher derrière un bord (4b) de l'ouverture (4a) en cas de déformation du boîtier (4) modifiant la disposition concentrique du collet (14a) et de l'ouverture (4a).

2. Dispositif d'accouplement selon la revendication 1, **caractérisé en ce que** le diamètre de l'ouverture (4a) est supérieur de 0,1 à 1 mm, en particulier de 0,4 à 0,8 mm, au diamètre du collet (14a, 14b).

3. Dispositif d'accouplement selon la revendication 1 ou 2, **caractérisé en ce qu'**un élément intérieur (3) est mobile dans le sens longitudinal du dispositif de fixation (1) entre une position d'arrêt et une position de détachement.

4. Dispositif d'accouplement selon la revendication 3, **caractérisé en ce qu'**un élément extérieur (2) présente au moins un moyen d'actionnement (7) pour la fixation de l'élément intérieur (3).

5. Dispositif d'accouplement selon la revendication 4, **caractérisé en ce que** le moyen d'actionnement (7) est disposé dans la zone d'une ouverture (8) prévue dans le boîtier (4).

6. Dispositif d'accouplement selon la revendication 5, **caractérisé en ce qu'**un tronçon (9) du boîtier (4) est cylindrique au moins dans la zone du dispositif de fixation (1), l'ouverture (8) étant disposée dans la surface latérale (9a) du tronçon (9).

7. Dispositif d'accouplement selon l'une au moins des revendications 4 à 6, **caractérisé en ce que** l'élément d'actionnement (7) comporte au moins un bouton (7a) mobile radialement qui est apte à être mis en contact par complémentarité de forme ou par friction avec l'élément intérieur (3), en particulier dans la position de détachement.

8. Dispositif d'accouplement selon la revendication 7, **caractérisé en ce que** le bouton (7a) présente un profil (7b), en particulier une saillie ou un creux, et l'élément intérieur (3) présente un profil opposé correspondant (3b), en particulier un creux ou une saillie, qui sont disposés l'un en face de l'autre dans la position de détachement et qui sont aptes à être mis en contact grâce à l'actionnement du bouton (7a).

9. Dispositif d'accouplement selon la revendication 8, **caractérisé en ce que** l'élément intérieur (3) comprend un élément de fixation (10) avec deux tronçons annulaires (11, 12) disposés concentriquement et espacés, qui sont reliés par des pattes (13) disposées dans le sens longitudinal du dispositif de fixation (1), le profil opposé (3b) étant formé dans l'une au moins des pattes (13).

10. Dispositif d'accouplement selon la revendication 9, **caractérisé en ce qu'**une face supérieure (13a) de la patte (13) dans laquelle est formé le profil opposé (3b) est creusée radialement vers l'intérieur dans la zone dudit profil opposé (3b).

11. Dispositif d'accouplement selon l'une au moins des revendications 3 à 10, **caractérisé en ce qu'**il est prévu sur l'élément extérieur (2) au moins une surface cunéiforme (2a) qui est inclinée par rapport à l'axe longitudinal du dispositif de fixation et qui coopère avec au moins une surface cunéiforme (3a) de forme complémentaire prévue sur la partie intérieure (3).

12. Dispositif d'accouplement selon la revendication 11, **caractérisé en ce que** l'élément extérieur (2) est fixé dans le boîtier (4) et l'élément intérieur (3) est apte à être amené dans la position d'arrêt et dans la position de détachement, l'angle d'inclinaison des surfaces cunéiformes (2a, 3a) étant ouvert dans le sens de déplacement d'arrêt de l'élément intérieur (3).

13. Dispositif d'accouplement selon la revendication 11 ou 12, **caractérisé en ce que** la ou les surfaces cunéiformes (3a) prévues sur l'élément intérieur (3) sont formées sur une extrémité arrière (5a), dans le sens de déplacement d'arrêt de l'élément intérieur (3), d'au moins une nervure longitudinale (5) rapportée sur ledit élément intérieur (3).

14. Dispositif d'accouplement selon la revendication 13, **caractérisé en ce que** l'élément intérieur (3) présente deux, trois ou quatre nervures longitudinales (5) qui présentent chacune une surface cunéiforme (3a).

15. Dispositif d'accouplement selon la revendication 13 ou 14, **caractérisé en ce que** la ou les surfaces cunéiformes (2a) prévues sur l'élément extérieur (2) sont formées sur une extrémité arrière (6a), dans le sens de déplacement d'arrêt de l'élément intérieur (3) d'au moins une rainure longitudinale (6) dans laquelle la ou les nervures longitudinales (5) sont aptes à coulisser.

16. Dispositif d'accouplement selon la revendication 15, **caractérisé en ce qu'**il est prévu un nombre de rainures longitudinales (6) qui correspond au nombre de nervures longitudinales (5).

17. Dispositif d'accouplement selon l'une au moins des revendications 3 à 16, **caractérisé en ce que** l'élément intérieur (3) présente au moins un organe d'enclenchement (15) avec un élément d'arrêt (15a) disposé radialement à l'extérieur, et l'élément extérieur (2) présente au moins une butée (2b), l'élément d'arrêt (15a) et la butée (2b) coopérant dans la position d'arrêt et étant séparés, dans la position détachée.

18. Dispositif d'accouplement selon la revendication 17, **caractérisé en ce que** le ou les organes d'enclenchement (15) comportent un organe d'entraînement (15b) avec une butée (15c) disposée radialement à l'intérieur qui est disposée en sens inverse par rapport au sens de déplacement d'arrêt de l'élément intérieur (3).

19. Dispositif d'accouplement selon la revendication 18, **caractérisé en ce que** le ou les organes d'enclenchement (15) sont conçus pour faire ressort radialement.

20. Véhicule automobile avec un dispositif d'accouplement selon l'une au moins des revendications 1 à 19.
